# EUROPEAN PATENT APPLICATION

(11) **EP 4 277 419 A1**
(43) Date of publication of application: **15.11.2023**
(21) Application number: 21916791.3
(22) Date of filing: 07.01.2021
(51) Int. Cl.: H04W 74/08

(54) **COMMUNICATION METHOD AND COMMUNICATION DEVICE**

(71) Applicant: Beijing Xiaomi Mobile Software Co., Ltd., Beijing 100085 (CN)
(72) Inventor: DONG, Xiandong, Beijing 100085 (CN)
(74) Representative: Gunzelmann, Rainer
(86) International application number: PCT/CN2021/070725
(87) International publication number: WO 2022/147734

(57) **Abstract**

The present application provides a communication method and a apparatus for communication. The communication method comprises: determining a first message frame, wherein the first message frame comprises parameter information related to at least one traffic identifier (TID); and sending the first message frame. By means of the technical solution provided in the exemplary embodiments of the present application, the spectrum utilization can be improved.

## Description

### TECHNICAL FIELD

The disclosure relates to the field of communication, and more particularly, to a method and device for communication in wireless communication.

### BACKGROUND

A current research scope of Wi-Fi technology is: 320MHz bandwidth transmission, aggregation and coordination of multiple frequency bands, etc. It is expected to increase a rate and throughput by at least four times compared with existing standards. The main application scenarios are: Video transmission, AR (Augmented Reality), VR (Virtual Reality), etc.

The aggregation and coordination of multiple frequency bands refers to a simultaneous communication between devices in frequency bands such as 2.4GHz, 5GHz, and 6GHz. For the simultaneous communication between devices in multiple frequency bands, it needs to define a new MAC (Media Access Control) mechanism to manage. Further, it is also expected that the aggregation and coordination of multiple frequency bands can support low-latency transmission.

A current multi-band aggregation and coordination technology will support a maximum bandwidth of 320MHz (160MHz+160MHz), and may also support 240MHz (160MHz+80MHz) and other bandwidths.

In a data transmission stage, in order to improve the efficiency of spectrum utilization, a multi-TID (Traffic Identifier) confirmation message frame format can be adopted. However, according to the existing communication mechanism, only one BA (Block Ack) corresponding to a TID can be negotiated at a time, then multiple negotiations are required for a multi-TID BA, resulting in a low spectrum efficiency and increased delay.

### SUMMARY

The disclosure aims to address at least the above-mentioned problems and/or defects, and the following technical solution is provided by embodiments of the disclosure.

According to exemplary embodiments of the disclosure, a method for communication is provided. The method includes: determining a first message frame, in which the first message frame includes parameter information related to at least one traffic identifier; and sending the first message frame.

According to exemplary embodiments of the disclosure, another method for communication is provided. The method may include: receiving a first message frame, in which the first message frame includes parameter information related to at least one traffic identifier; and performing a communication operation based on the first message frame.

According to exemplary embodiments of the disclosure, an apparatus for communication is provided. The apparatus may include: a processing module, configured to determine a first message frame, in which the first message frame includes parameter information related to at least one traffic identifier; and a communication module, configured to send the first message frame.

According to exemplary embodiments of the disclosure, another apparatus for communication is provided. The apparatus may include: a communication module, configured to receive a first message frame, in which the first message frame includes parameter information related to at least one traffic identifier; and a processing module, configured to control the communication module to perform a communication operation based on the first message frame.

According to embodiments of the disclosure, the parameter information includes more than one traffic identifier.

According to embodiments of the disclosure, the parameter information includes block acknowledgment policy parameters corresponding to the more than one traffic identifier respectively.

According to embodiments of the disclosure, the parameter information further includes buffer size parameters corresponding to the more than one traffic identifier respectively.

According to embodiments of the disclosure, a length of the buffer size parameter is related to a supported MSDU type.

According to embodiments of the disclosure, the MSDU type includes at least one of a first type of MSDU or A-MSDU or a second type of MSDU or A-MSDU.

According to embodiments of the disclosure, the parameter information is encapsulated in the first message frame, in which the first message frame is an ADDBA request frame or an ADDBA response frame.

According to exemplary embodiments of the disclosure, an electronic device is provided. The electronic device includes a memory, a processor, and a computer program stored on the memory and executable on the processor. When the computer program is executed by the processor, the above mentioned method is implemented.

According to exemplary embodiments of the disclosure, a computer readable storage medium is provided. Computer programs are stored on the computer readable storage medium. When the computer programs are executed by a processor, the above mentioned method is implemented.

The technical solution provided by exemplary embodiments of the disclosure can reduce the interaction time of the multi-TID BA protocol and improve the spectrum utilization.

### BRIEF DESCRIPTION OF THE DRAWINGS

The above and other features of embodiments of the disclosure will become more apparent by describing in detail example embodiments of the disclosure with reference to the accompanying drawings.
FIG. 1 is a diagram illustrating an example of a BA negotiation.
FIG. 2 is a flowchart illustrating a method for communication according to exemplary embodiments of the disclosure.
FIG. 3 is a flowchart illustrating another method for communication according to exemplary embodiments of the disclosure.
FIG. 4 is a block diagram illustrating an apparatus for communication according to exemplary embodiments of the disclosure.

### DETAILED DESCRIPTION

The following description with reference to the accompanying drawings is provided to assist in a comprehensive understanding of embodiments of the disclosure as defined by the appended claims and their equivalents. The embodiments of the disclosure include various specific details, which are to be regarded as merely exemplary. Also, the descriptions of well-known techniques, functions, and constructions may be omitted for clarity and conciseness.

The terms and words used in the disclosure are not limited to the bibliographical meanings, but are merely used by the inventor to enable a clear and consistent understanding of the disclosure. Accordingly, the descriptions of embodiments of the disclosure are provided for purposes of illustration and not for purpose of limitation to those skilled in the art.

It should be understood by those skilled in the art that, unless the context clearly indicates otherwise, the singular forms "a", "one", "said" and "the" used herein may also include the plural forms. It should be further understood that the term "include" as used in the disclosure refers to the presence of the described features, integers, steps, operations, components and/or assemblies, but does not exclude the presence or addition of one or more other features, integers, steps, operations, components, assemblies and/or groups thereof.

It should be further understood that, although the terms "first", "second", etc. may be configured to describe various elements, these elements shall not be limited to these terms. These terms are only used to distinguish one element from another. Thus, a first element discussed below may also be referred to as a second element without departing from the teachings of exemplary embodiments.

It should be understood that when the component is "connected" or "coupled" to another component, it may be directly connected or coupled to other components, or there may be an intermediate component. In addition, "connected" or "coupled" as used herein may include wirelessly connected or wirelessly coupled. The term "and/or" or the expression "at least one of" includes any and all combinations of one or more of the associated listed items.

Unless otherwise defined, all terms (including technical and scientific terms) used herein have the same meaning as commonly understood by those skilled in the art to which the disclosure belongs.

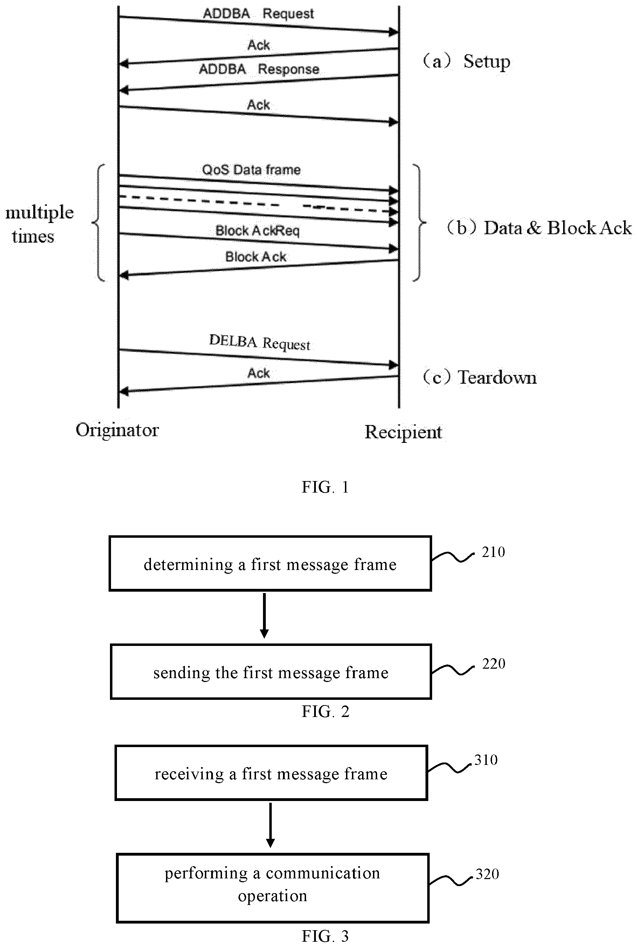

Fig. 1 is a diagram illustrating an example of a BA negotiation.

Referring to FIG. 1, in the Setup phase (a), an originator and a recipient initiate a session through a handshake between an ADDBA Request (Add Block Ack Request) frame and an ADDBA Response (Add Block Ack Response) frame. Both the ADDBA Request frame and the ADDBA Response frame may be management frames, and may exist in the form of Action frames. The management frame (ADDBA Request frame and ADDBA Response frame) needs to be acknowledged via Ack (Acknowledgment). As shown in Fig. 1, the process of establishing a session is: the originator sends an ADDBA Request frame to the recipient; the recipient returns an Ack indicating that the ADDBA Request frame has been received, and then the recipient sends an ADDBA Response frame for the ADDBA Request frame; the originator returns an Ack indicating that the ADDBA Response frame has been received.

After the session connection is established, in the Data & Block Ack phase (b), for example, during the transmission opportunity (TXOP), the originator may continuously send multiple data frames, for example, a quality of service (QoS) data frame (that is, a QoS Data frame of FIG. 1), and after the transmission of the data frame, a Block Ack request frame (Block Ack Req) is sent; the recipient feeds back a Block Ack (BA) for multiple data frames Ack.

After the Block Ack is acknowledged, the session may be closed. Specifically, in the Teardown phase (c), the originator may send a DELBA Request frame, and then the recipient returns an Ack.

In the Setup phase (a), the format of the ADDBA Request frame sent by the originator to the recipient may be as shown in Table 1 below.

**Table 1. ADDBA Request frame Action field format**

| Order | Information |
|---|---|
| 1 | Category |
| 2 | Block Ack Action |
| 3 | Dialog Token |
| 4 | Block Ack Parameter Set |
| 5 | Block Ack Timeout Value |
| 6 | Block Ack Starting Sequence Control |
| 7 | GCR Group Address element (optional) |
| 8 | Multi-band (optional) |
| 9 | TCLAS (optional) |
| 10 | ADDBA Extension (optional) |

Referring to Table 1, the ADDBA Request frame may include: Category field, Block Ack Action field, Dialog Token field, Block Ack Parameter Set field, Block Ack Timeout Value field, Block Ack Starting Sequence Control field. In addition, optionally, the ADDBA Request frame may further include: Groupcast with Retries (GCR) Group Address Element field, Multi-band field, TCLAS field and ADDBA Extension field.

The Block Ack Parameter Set field of Table 1 may be defined as shown in Table 2 below.

**Table 2. Block Ack Parameter Set fixed field**

| B0 | B1 | B2 | B5 | B6 | B15 |
|---|---|---|---|---|---|
| A-MSDU Supported | Block Ack Policy | TID | | Buffer Size | |
| Bits: 1 | 1 | 4 | | 10 | |

In Table 2, the MSDU may indicate an MAC Service Data Unit. The BA policy may be used to define whether the Ack is immediate feedback or delayed feedback. The TID may indicate a traffic identifier. The Buffer Size can indicate the number of buffers available for a particular TID. For example, when the A-MSDU Supported field is equal to 0 as indicated by the Block Ack Parameter Set field transmitted by a station, the number of octets that each buffer can hold is equal to the maximum value of an MSDU. When the A-MSDU Supported field is equal to 1 as indicated by the station, the number of octets that each buffer can hold is equal to the maximum value of an A-MSDU supported by the station.

In the Data & Block Ack phase (b), for a Multi-TID BA (multi-TID Block Ack), a Block Ack (BA) information field may be as shown in Table 3 below.

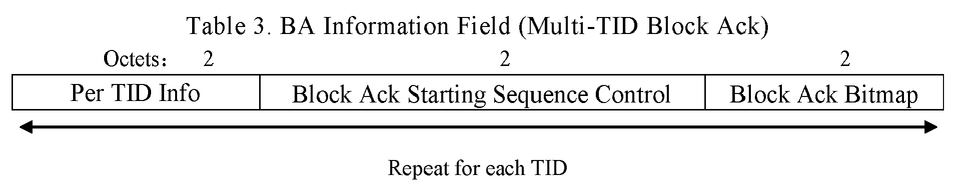

In the Data & Block Ack phase (b), for a Multi-TID BAR (Multi-TID Block AckReq), a Block AckReq (BAR) information field may be defined as shown in Table 4 below.

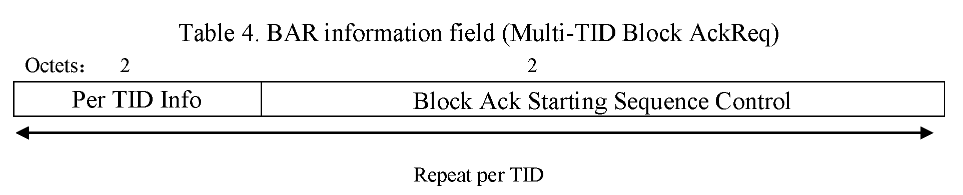

A Per TID Info subfield may be defined as shown in Table 5 below.

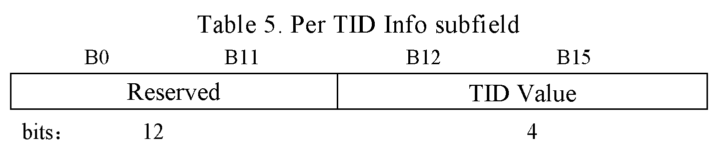

A Block Ack Starting Sequence Control subfield can be defined as shown in Table 6 below.

**Table 6. Block Ack Starting Sequence Control subfield**

| Fragment Number (0) | | Starting Sequence Number |
|---|---|---|
| Bits: | 4 | 12 |

Since the Block ACK parameter set field contained in the ADDBA request frame includes only one TID subfield (see Table 2), that is to say, only one BA corresponding to a TID can be negotiated at a time, but there is a multi-TID BA (see Table 3 and Table 4) format in the BAR information field and the BA information field, therefore, multiple negotiations are required for the multi-TID BA, so the spectrum efficiency is not high, and the delay is also increased.

FIG. 2 is a flowchart illustrating a method for communication according to an exemplary embodiment of the disclosure.

The flowchart of FIG. 2 can be an operation performed on an originator side, and correspondingly, FIG. 3, which will be described below, can be an operation performed by a recipient side. For example, the originator may be a station (STA), and correspondingly, the recipient may be an access point (AP); or the originator may be an AP, and correspondingly, the recipient may be a STA. The AP may include software applications and/or circuitry to enable other types of nodes in a wireless network to communicate with the outside and inside of the wireless network through the AP. For example, the AP may be a terminal device or a network device equipped with a Wi-Fi (Wireless Fidelity) chip. For example, the station STA may include, but is not limited to, a cellular phone, smart phone, wearable device, computer, personal digital assistant (PDA), personal communication system (PCS) device, personal information managers (PIM), personal navigation device ( PND), GPS, multimedia device, Internet of Things (IoT) device, etc.

Referring to FIG. 2, in step 210, a first message frame may be determined, wherein the first message frame includes parameter information related to at least one traffic identifier (TID). According to embodiments of the disclosure, the TID may correspond to different upper-layer services and QoS requirements. In embodiments of the disclosure, there may be many ways to determine the first message frame. For example, the originator may generate the first message frame according to at least one of: a network condition, a load condition, a hardware capability of a sending/receiving device, a service type, or a related protocol, which is not specifically limited in embodiments of the disclosure. In embodiments of the disclosure, the originator may also obtain the first message frame from an external device, which is not specifically limited in embodiments of the disclosure.

For example, the first message frame may be an ADDBA request frame or an ADDBA response frame. The included parameter information may be, for example, an enhanced TID BA parameter set subfield, which may be defined as shown in Table 7 below.

**Table 7. Enhanced TID BA parameter set subfield**

| | | | | | | | | |
|---|---|---|---|---|---|---|---|---|
| A-MSDU Supported 1 | Block Ack Policy 1 | TID 1 | Buffer Size 1 | A-MSDU Supported 2 | Block Ack Policy 2 | TID 2 | Buffer Size 1 | ...... |

According to embodiments of the disclosure, the parameter information may include: more than one traffic identifier, such as TID 1, TID2, etc. in Table 7. More than one traffic identifier (TID1, TID2, etc.) can correspond to different upper-layer services and QoS requirements. In a case of supporting a general service, each TID (TID1, TID2, etc.) may have four bits as shown in Table 2, or in a case of supporting other low latency services, the TID may have one more bit, i.e., five bits. However, this is only exemplary, and the number of bits per TID is not limited thereto.

According to embodiments of the disclosure, the parameter information may further include block acknowledgment policy parameters corresponding to the more than one traffic identifier respectively, such as BA policy 1 and BA policy 2 in Table 7. In an embodiment, when the block acknowledgement policy parameter is set to 1, it is used to indicate an Immediate Block Ack, when the block acknowledgement policy parameter is set to 0, it is used to indicate a Delayed Block Ack. It will be understood that the set value of the block acknowledgment policy parameter is exemplary, and other values may also be used for identification.

According to embodiments of the disclosure, the parameter information may further include buffer size parameters corresponding to the more than one traffic identifier respectively, such as buffer size 1 and buffer size 2 in Table 7.

According to embodiments of the disclosure, the parameter information may further include information of MSDU corresponding to the more than one traffic identifier respectively, for example, A-MSDU Supported 1, A-MSDU Supported 2, etc., in Table 7.

In an embodiment, a length of the buffer size parameter is related to the supported MSDU type. For example, the MSDU type includes at least one of a first type of MSDU or A-MSDU or a second type of MSDU or A-MSDU. That is, the length of the buffer size parameter may have a different number of bits according to the MSDU or A-MSDU. For example, the first type of MSDU or A-MSDU may be a 1024 MSDU or A-MSDU, and the second type of MSDU or A-MSDU may be a 4096 MSDU or A-MSDU. If the communication system supports maximum the 1024 MSDU or A-MSDU, the length of the buffer size parameter may be 10 bits. If the communication system supports the 4096 MSDU or A-MSDU, the length of the buffer size parameter may be 12 bits. However, this is only exemplary, the MSDU or A-MSDU may also have other types, and the length of the buffer size parameter is not limited thereto.

It can be understood that each element shown in Tables 1 to 7 exists independently, and these elements are exemplarily listed in the same table, but it does not mean that all elements in the table must simultaneously exist as shown in the table. The value of each element is independent of the value of any other element in Tables 1 to 7. Therefore, those skilled in the art can understand that the value of each element in the tables of the disclosure is an independent embodiment.

According to embodiments of the disclosure, the parameter information shown in Table 7 may be encapsulated in the first message frame, for example, may be encapsulated in a corresponding order (e.g., order 11) of the ADDBA request frame or the ADDBA response frame.

In step 220, the first message frame may be sent. For example, the first message frame may be sent under a first link. The first link is any link supported by the originator, the TID may be mapped to any link supported by the originator, and the originator may be a device that supports multi-link communication (STR (simultaneous Tx&Rx: supporting simultaneous transmission and reception) or Non-STR), EMLMR (enhanced multi-link multi-radio communication) device, EMLSR (enhanced multi-link single-radio communication) device.

FIG. 3 is a flowchart illustrating another method for communication according to an exemplary embodiment of the disclosure. The flowchart of FIG. 3 can be an operation performed on a recipient side, that is, an operation corresponding to the operation of the originator side as shown in FIG. 2.

Referring to FIG. 3, in step 310, a first message frame may be received, in which the first message frame may include parameter information related to at least one traffic identifier. In step 320, a communication operation may be performed based on the first message frame. For example, in step 320, multiple TID BAs may be negotiated at one time based on the parameter information in step 310.

According to embodiments, the parameter information may include more than one traffic identifier, a block acknowledgment policy parameter corresponding to each traffic identifier, a buffer size parameter corresponding to each traffic identifier, and the like.

According to embodiments, a length of the buffer size parameter may be related to a supported MSDU type. For example, the MSDU type may be at least one of a first type of MSDU or A-MSDU or a second type of MSDU or A-MSDU.

According to embodiments of the disclosure, the parameter information may be encapsulated in a first message frame, for example, may be encapsulated in a corresponding order (eg, order 11) of an ADDBA request frame or an ADDBA response frame.

It will be understood that the parameter information in FIG. 3 may be similar to the descriptions in FIG. 2 and Table 7, and repeated descriptions are omitted here for brevity.

In embodiments of the disclosure, the block acknowledgment parameter set field can be redefined, so that it can be applied to the scenario of multi-TID BA. For example, a multi-TID BA parameter set subfield format may be defined, which may have the format shown in Table 7 above. The TID subfield may be four bits, or the TID may have one more bit, that is, five bits, to support other low-latency services. The block acknowledgement policy parameter may be set to 1 for Immediate Block Ack, or set to 0 for Delayed Block Ack. In addition, if a 1024 MSDU or A-MSDU is maximum supported, the length of the buffer size parameter subfield may be 10 bits, and if 4096 MSDU or A-MSDU can be supported, the length of the buffer size parameter subfield may be 12 bits. In addition, the parameter information may be encapsulated in order11 of the ADDBA request or ADDBA response frame.

The methods for communication described with reference to FIG. 2 and FIG. 3 reduce the interaction time of the multi-TID BA protocol and improve the spectrum utilization.

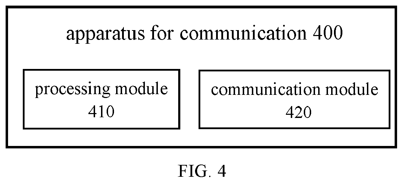

FIG. 4 is a block diagram illustrating an apparatus for communication 400 according to an exemplary embodiment of the disclosure. The apparatus for communication 400 may include a processing module 410 and a communication module 420.

The apparatus for communication 400 shown in FIG. 4 is applicable to an originator. In this case, the processing module 410 may be configured to determine a first message frame, in which the first message frame includes parameter information related to at least one traffic identifier; the communication module 420 may be configured to send the first message frame. That is, when the apparatus for communication 400 shown in FIG. 4 is applicable to the originator, the processing module 410 and the communication module 420 may perform the operation described with reference to FIG. 2, and repeated descriptions may be omitted here for brevity.

The apparatus for communication 400 shown in FIG. 4 is applicable to a recipient. In this case, the communication module 420 may be configured to receive a first message frame, in which the first message frame may include parameter information related to at least one traffic identifier, the processing module 410 may be configured to control the communication module 420 to perform a communication operation based on the first message frame. That is, when the apparatus for communication 400 shown in FIG. 4 is applicable to the recipient, the processing module 410 and the communication module 420 may perform the operations described with reference to FIG. 3, and repeated descriptions may be omitted here for brevity.

According to embodiments, the parameter information may include more than one traffic identifier, a block acknowledgment policy parameter corresponding to each traffic identifier, a buffer size parameter corresponding to each traffic identifier, and the like.

According to embodiments, a length of the buffer size parameter may be related to a supported MSDU type. For example, the MSDU type may be at least one of a first type of MSDU or A-MSDU or a second type of MSDU or A-MSDU.

According to embodiments of the disclosure, the parameter information may be encapsulated in a first message frame, for example, may be encapsulated in a corresponding order (eg, order 11) of an ADDBA request frame or an ADDBA response frame.

It will be understood that the parameter information involved in the apparatus for communication of FIG. 4 may be similar to the description in Table 7, and repeated descriptions are omitted here for brevity. In addition, the apparatus for communication 400 shown in FIG. 4 is only exemplary, and embodiments of the disclosure are not limited thereto, for example, the apparatus for communication 400 may further include other modules, such as a memory module and the like. Furthermore, various modules in the apparatus for communication 400 may be combined into more complex modules, or may be divided into more separate modules to support various functions.

The apparatus for communication described with reference to FIG. 4 reduces the interaction time of the multi-TID BA protocol and improves the spectrum utilization.

Based on the same principles as the methods provided by embodiments of the disclosure, embodiments of the disclosure further provide an electronic device, the electronic device includes a processor and a memory; in which, the memory stores machine-readable instructions (or may referred to as a "computer program"); the processor is configured to execute machine-readable instructions to implement the methods described with reference to Figs. 2 and 3.

Embodiments of the disclosure also provide a computer-readable storage medium having computer programs stored thereon. When the computer program are executed by a processor, the methods described with reference to Figs. 2 and 3 are implemented.

In an exemplary embodiment, the processor may be configured to implement or execute various exemplary logical blocks, modules and circuits described in connection with the disclosure, for example, a Central Processing Unit (CPU), a general processor, a Digital Signal Processor (DSP), an Application Specific Integrated Circuit (ASIC), a Field Programmable Gate Array (FPGA), or other programmable logic devices, transistor logic devices, hardware components or any combination thereof. The processor may also be a combination used to implement a computing function, for example, a combination consisting of one or more microprocessors, or a combination consisting of DSPs and microprocessors.

In an exemplary embodiment, the memory may be a Read Only Memory (ROM), a Random Access Memory (RAM), an Electrically Erasable Programmable Read Only Memory (EEPROM), a Compact Disc Read Only Memory (CD-ROM) or other optical disc memories, optical disk memories (including compact disc, laser disc, CD-ROM, digital general disc, Bluray disc and the like), disk storage mediums or other magnetic storage devices, or any other medium that can be used to carry or store program codes in the form of instructions or data structures and can be accessed by a computer, which is not limited herein.

It should be understood that although steps in the flowchart of the accompanying drawings are shown sequentially as indicated by the arrows, the steps are not necessarily performed sequentially in the order indicated by the arrows. Unless explicitly stated otherwise in the disclosure, there is no strict sequential limitation on the execution of these steps, which may be performed in other orders. In addition, at least some of the steps in the flowchart of the accompanying drawings may include a plurality of sub-steps or a plurality of phases, which are not necessarily executed at the same time, and may be executed at different times. The execution order is not necessarily sequential, and the steps can be performed alternately or alternatively with other steps or at least part of sub-steps or phases of other steps.

Although the disclosure has been illustrated and described with reference to certain embodiments of the disclosure, it will be understood by those skilled in the art that various changes in form and details may be made therein without departing from the scope of the disclosure. Therefore, the scope of the disclosure should not be limited by the embodiments, but should be defined by the appended claims and their equivalents.

## Claims

1. A method for communication, comprising:
determining a first message frame, wherein the first message frame comprises parameter information related to at least one traffic identifier; and
sending the first message frame.

2. The method according to claim 1, wherein the parameter information comprises more than one traffic identifier.

3. The method according to claim 1 or 2, wherein the parameter information comprises block acknowledgment policy parameters corresponding to the more than one traffic identifier respectively.

4. The method according to claim 3, wherein the parameter information further comprises buffer size parameters corresponding to the more than one traffic identifier respectively.

5. The method according to claim 4, wherein a length of the buffer size parameter is related to a supported MSDU type.

6. The method according to claim 5, wherein the MSDU type comprises at least one of a first type of MSDU or A-MSDU or a second type of MSDU or A-MSDU.

7. The method according to claim 1, wherein the parameter information is encapsulated in the first message frame,
wherein the first message frame is an ADDBA request frame or an ADDBA response frame.

8. A method for communication, comprising:
receiving a first message frame, wherein the first message frame comprises parameter information related to at least one traffic identifier; and
performing a communication operation based on the first message frame.

9. The method according to claim 8, wherein the parameter information comprises more than one traffic identifier.

10. The method according to claim 8 or 9, wherein the parameter information comprises block acknowledgment policy parameters corresponding to the more than one traffic identifier respectively.

11. The method according to claim 10, wherein the parameter information further comprises buffer size parameters corresponding to the more than one traffic identifier respectively.

12. The method according to claim 11, wherein a length of the buffer size parameter is related to a supported MSDU type.

13. The method according to claim 12, wherein the MSDU type comprises at least one of a first type of MSDU or A-MSDU or a second type of MSDU or A-MSDU.

14. The method according to claim 8, wherein the parameter information is encapsulated in the first message frame,
wherein the first message frame is an ADDBA response frame or an ADDBA request frame.

15. An apparatus for communication, comprising:
a processing module, configured to determine a first message frame, wherein the first message frame comprises parameter information related to at least one traffic identifier; and
a communication module, configured to send the first message frame.

16. An apparatus for communication, comprising:
a communication module, configured to receive a first message frame, wherein the first message frame comprises parameter information related to at least one traffic identifier; and
a processing module, configured to control the communication module to perform a communication operation based on the first message frame.

17. An electronic device, comprising a memory, a processor, and a computer program stored on the memory and executable on the processor, wherein when the computer program is executed by the processor, the method according to any one of claims 1 to 7 or 8 to 14 is implemented.

18. A computer-readable storage medium having computer programs stored thereon, wherein when the computer programs are executed by a processor, the method according to any one of claims 1 to 7 or 8 to 14 is implemented.
